# EUROPEAN PATENT APPLICATION

(11) **EP 4 851 488 A1**
(43) Date of publication of application: **09.12.2026**
(21) Application number: 25748104.4
(22) Date of filing: 24.01.2025
(51) Int. Cl.: F16H 7/02, F16G 1/28

(54) **TRANSMISSION SYSTEM**

(30) Priority: 31.01.2024 JP 2024012996
(71) Applicant: Bando Chemical Industries, Ltd., Kobe-shi, Hyogo 650-0047 (JP)
(72) Inventor: MEKI, Yoshitaka, Kobe-shi, Hyogo 650-0047 (JP); HIRANO, Mukyo, Kobe-shi, Hyogo 650-0047 (JP); SHIRAISHI, Masaya, Kobe-shi, Hyogo 650-0047 (JP)
(74) Representative: Parker, Andrew James
(86) International application number: PCT/JP2025/002184
(87) International publication number: WO 2025/164522

(57) **Abstract**

A power transmission belt system including a toothed belt, a first toothed pulley, and a second toothed pulley having a larger diameter than the first toothed pulley, wherein the toothed belt is wound around the first toothed pulley and the second toothed pulley, the belt teeth have a nominal pitch of 2 mm, the belt teeth are helical teeth having a tooth trace angle of 5.0°or more and 9.0°or less, a speed ratio is 2.0 or more and less than 5.0, and the toothed belt and the first toothed pulley, and the toothed belt and the second toothed pulley, each satisfy the following Formula (1). 1.5X-0.31<Y<X-0.03 ...(1), where X is a PLD of the toothed belt, and Y is a value calculated by the following Formula (2). $Y = \left(\left(toothed belt nominal pitch\times number of pulley teeth T/π\right)-tooth tip circle diameter\right) / 2$ (2).

## Description

### TECHNICAL FIELD

The present invention relates to a power transmission belt system.

This application claims priority from Japanese Patent Application No. 2024-012996 filed on January 31, 2024, the entire content of which is incorporated herein by reference.

### BACKGROUND ART

A power transmission belt system including a toothed belt and a toothed pulley is known as a system that transmits power. The power transmission belt system including the toothed belt can perform stable synchronous transmission with low tension. Therefore, such a power transmission belt system is suitable for use in electric power steering apparatuses and general industrial machines such as machine tools and textile machines.

Meanwhile, the power transmission belt system described above has a problem in that sound generated during driving (running sound) becomes a source of noise.

Methods for reducing noise generated when a toothed belt and a toothed pulley mesh with each other have been proposed.

For example, PATENT LITERATURE 1 discloses a helical-tooth belt including a back portion in which tensile cords are embedded, and a plurality of tooth portions provided on one surface of the back portion at predetermined intervals along the belt longitudinal direction, each inclined with respect to the belt width direction. The surfaces of the tooth portions and a part of the one surface of the back portion are composed of a tooth fabric, the tooth pitch of the plurality of tooth portions is 2 mm or more and less than 4 mm, the thickness of the back portion is 0.4 mm or more and 1.8 mm or less, the tensile cords are twisted cords containing high-strength glass fibers or carbon fibers and having a diameter of 0.2 mm or more and 0.6 mm or less, and the tensile cords are arranged such that the tensile cord pitch between the tensile cords is in the range of 0.45 mm or more and 0.6 mm or less.

### CITATION LIST

### PATENT LITERATURE

PATENT LITERATURE 1: Japanese Laid-Open Patent Publication JP 2019 - 178 776 A

### SUMMARY OF THE INVENTION

### TECHNICAL PROBLEM

A power transmission belt system composed of a toothed belt and a toothed pulley is required to reduce running sound (suppress noise), and this requirement will never be eliminated. In particular, in applications where quietness is required, it is important to suppress noise.

### SOLUTION TO THE PROBLEM

An object of the present invention is to provide a power transmission belt system that is specified from a new perspective different from a conventional one and suppresses noise.

A power transmission belt system according to an aspect of the present invention is a power transmission belt system including:
a toothed belt having a plurality of belt teeth provided on an inner circumferential side thereof;
a first toothed pulley having a plurality of pulley grooves provided on an outer circumference thereof and configured to mesh with the belt teeth; and
a second toothed pulley having a plurality of pulley grooves provided on an outer circumference thereof and configured to mesh with the belt teeth, and having a larger diameter than the first toothed pulley, wherein
the toothed belt is wound around the first toothed pulley and the second toothed pulley,
the belt teeth have a nominal pitch of 2 mm,
the belt teeth are helical teeth having a tooth trace angle of 5.0°or more and 9.0°or less,
a speed ratio is 2.0 or more and less than 5.0, and
the toothed belt and the first toothed pulley, and the toothed belt and the second toothed pulley, each satisfy the following Formula (1), $1.5 X - 0.31 < Y < X - 0.03$ (1), where X is a PLD of the toothed belt, and Y is a value calculated by the following Formula (2), $Y = \left(\begin{matrix}\left(toothed belt nominal pitch\times number of pulley teeth T/π\right) \\ - tooth tip circle diameter\end{matrix}\right) / 2$ (2).

### ADVANTAGEOUS EFFECTS OF THE INVENTION

According to the present invention, it is possible to provide a power transmission belt system that suppresses noise.

### BRIEF DESCRIPTION OF DRAWINGS

- FIG. 1: is a side view schematically showing a power transmission belt system.
- FIG. 2: is a perspective view schematically showing a toothed belt.
- FIG. 3: is a cross-sectional view taken along a line A-A in FIG. 2.
- FIG. 4: is an end view taken along a line B-B in FIG. 2.
- FIG. 5: is a plan view showing a part of the inner circumferential surface of the toothed belt 10 in FIG. 2.
- FIG. 6: is a diagram illustrating a production method for the toothed belt.
- FIG. 7: is a diagram illustrating the production method for the toothed belt.
- FIG. 8: is a diagram illustrating the production method for the toothed belt.
- FIG. 9: is a diagram showing the dimensions of a belt tooth.
- FIG. 10: is a diagram showing the dimensions of a pulley groove.
- FIG. 11A and FIG. 11B: are diagrams schematically showing a power transmission belt system for evaluating noise.
- FIG. 12: is a graph showing the evaluation results of Examples and Comparative Examples.

### DETAILED DESCRIPTION

An outline of an embodiment of the present invention will be listed and described.
Aspect [1]: A power transmission belt system including:
a toothed belt having a plurality of belt teeth provided on an inner circumferential side thereof;
a first toothed pulley having a plurality of pulley grooves provided on an outer circumference thereof and configured to mesh with the belt teeth; and
a second toothed pulley having a plurality of pulley grooves provided on an outer circumference thereof and configured to mesh with the belt teeth, and having a larger diameter than the first toothed pulley, wherein
the toothed belt is wound around the first toothed pulley and the second toothed pulley,
the belt teeth have a nominal pitch of 2 mm,
the belt teeth are helical teeth having a tooth trace angle of 5.0°or more and 9.0°or less,
a speed ratio is 2.0 or more and less than 5.0, and
the toothed belt and the first toothed pulley, and the toothed belt and the second toothed pulley, each satisfy the following Formula (1), $1.5 X - 0.31 < Y < X - 0.03$ (1), where X is a PLD of the toothed belt, and Y is a value calculated by the following Formula (2), $Y = \left(\begin{matrix}\left(toothed belt nominal pitch\times number of pulley teeth T/π\right) \\ - tooth tip circle diameter\end{matrix}\right) / 2$ (2)

Since this power transmission belt system satisfies the Formula (1), smooth meshing between the toothed belt and the toothed pulley is ensured, thereby suppressing noise.

Aspect [2]: In the power transmission belt system of aspect [1] above, preferably, the PLD of the toothed belt is 0.280 mm or more and 0.360 mm or less.

Aspect [3]: In the power transmission belt system of aspect [1] or [2] above, preferably,

PLDs of the first toothed pulley and the second toothed pulley are 0.180 mm or more and 0.280 mm or less.

Aspect [4]: In the power transmission belt system of any of aspects [1] to [3] above, preferably, the toothed belt has a belt width of 20 mm or more.

Aspect [5]: In the power transmission belt system of any of aspects [1] to [4] above, preferably,
an overlap ratio ε of the belt teeth of the toothed belt is 0.80 or more.

Aspect [6]: In the power transmission belt system of any of aspects [1] to [5] above, preferably,
tooth profiles of the belt teeth of the toothed belt are curvilinear tooth profiles.

Aspect [7]: In the power transmission belt system of any of aspects [1] to [6] above, preferably,
the belt teeth of the toothed belt each have a width of 0.8 mm or more and 1.8 mm or less.

Aspect [8]: In the power transmission belt system of any of aspects [1] to [7] above, preferably,
the toothed belt includes
   a belt body having a band-like shape and including a base portion whose cross-section perpendicular to a belt longitudinal direction has a quadrangular shape, and a plurality of tooth portions provided on an inner circumferential side of the base portion at predetermined equal intervals and integrated with the base portion,
   a tensile cord embedded in the belt body, and
   a reinforcing fabric provided so as to cover inner circumferential surfaces of the tooth portions,
the toothed belt has a belt thickness of 1.1 mm or more,
the base portion has a thickness of 0.30 mm or more and 1.6 mm or less, and
the belt teeth each have a tooth height of 0.50 mm or more and 1.0 mm or less.

Hereinafter, an embodiment of the present invention will be described with reference to the drawings.

### Power Transmission Belt System

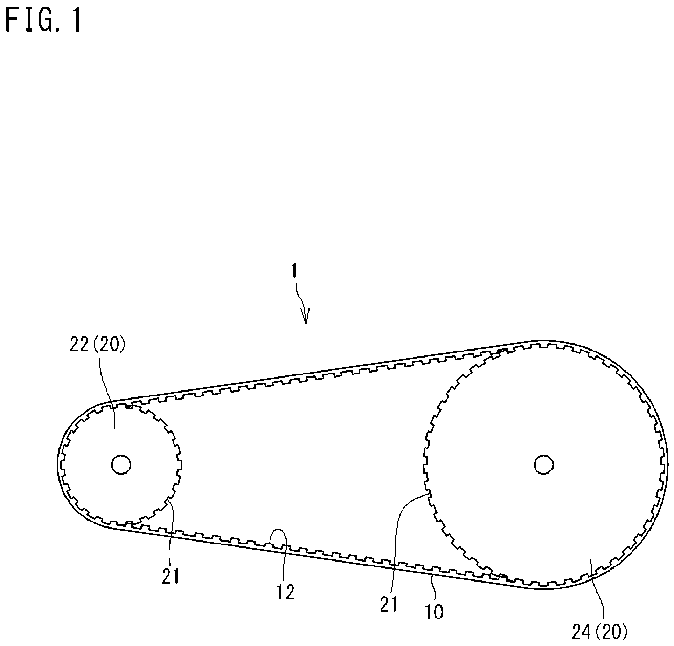

FIG. 1 is a side view schematically showing a power transmission belt system 1 according to an embodiment of the present invention.

The power transmission belt system 1 is suitable for use in, for example, electric power steering apparatuses and general industrial machines such as machine tools, printing machines, textile machines, and injection molding machines.

The power transmission belt system 1 includes a drive pulley (first toothed pulley) 22, a driven pulley (second toothed pulley) 24, and a toothed belt 10, as shown in FIG. 1. The drive pulley 22 is a small-diameter pulley having a relatively small diameter, and the driven pulley 24 is a large-diameter pulley having a relatively large diameter.

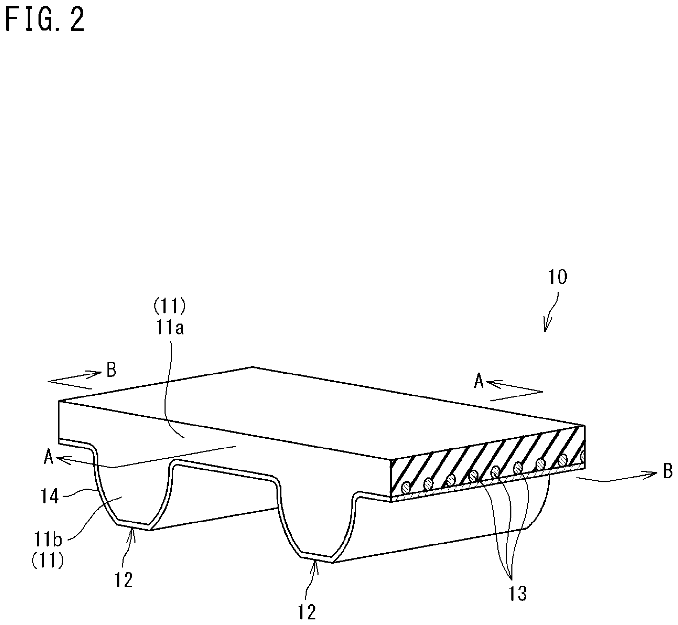

The drive pulley 22 and the driven pulley 24 each have a plurality of pulley grooves 21 formed thereon. The toothed belt 10 has a plurality of belt teeth 12 (see FIG. 2) which are provided on the inner circumferential side thereof and mesh with the pulley grooves 21. The toothed belt 10 has a tensile cord 13 embedded therein. The toothed belt 10 is looped over the drive pulley 22 and the driven pulley 24.

Each of the drive pulley 22 and the driven pulley 24 has the pulley grooves 21 which are provided at equal intervals along the outer circumference thereof at a predetermined pitch and mesh with the belt teeth 12 of the toothed belt 10. The pulley grooves 21 of the drive pulley 22 and the pulley grooves 21 of the driven pulley 24 have the same shape. Hereinafter, the drive pulley 22 and the driven pulley 24 are also collectively referred to simply as toothed pulley 20.

The speed ratio of the power transmission belt system 1 (the number of teeth of the driven pulley 24/the number of teeth of the drive pulley 22) is 2.0 or more and less than 5.0. This case is suitable for reducing the size of a motor and also suppressing noise.

On the other hand, if the speed ratio is less than 2.0, the desired assist force cannot be ensured in some cases unless the size of the motor is increased. Therefore, it becomes difficult to downsize an apparatus including the power transmission belt system 1.

Also, if the speed ratio exceeds 5.0, it tends to become necessary to increase the rotational speed of the motor, making it more difficult to suppress noise.

The power transmission belt system 1 transmits power from a drive source to a driven side. In the power transmission belt system 1, a belt running speed is, for example, 0 m/s or more and 33 m/s or less. In the power transmission belt system 1, a transmission capacity is, for example, 0.1 kW or more and 10 kW or less.

### Toothed Belt

FIG. 2 is a perspective view showing a part of the toothed belt 10. The toothed belt 10 constitutes the power transmission belt system 1 according to the embodiment of the present invention.

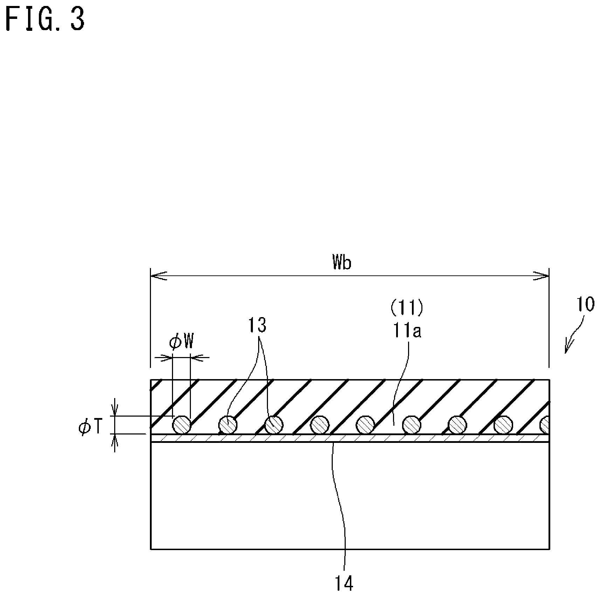

FIG. 3 is a cross-sectional view taken along a line A-A in FIG. 2.

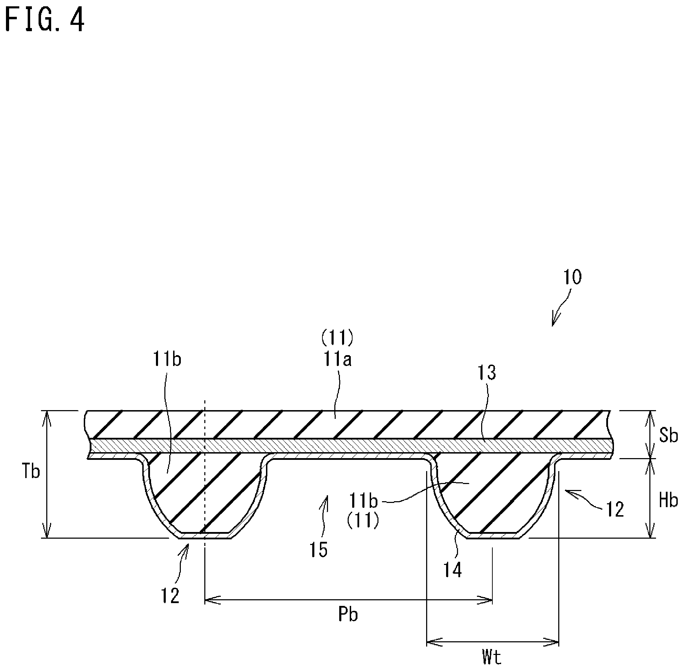

FIG. 4 is an end view taken along a line B-B in FIG. 2.

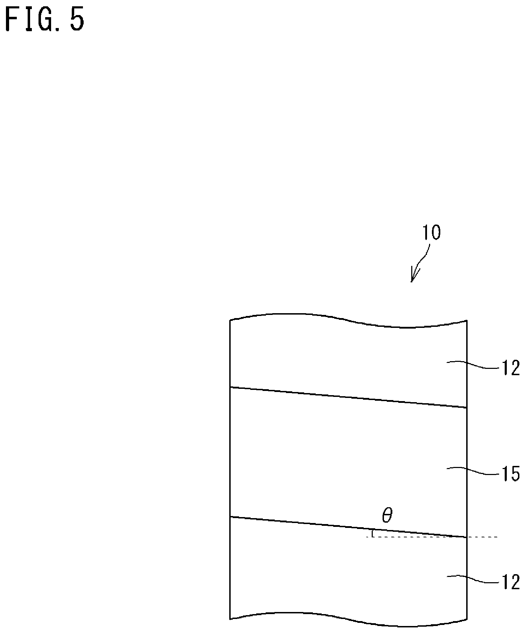

FIG. 5 is a plan view showing a part of the inner circumferential surface of the toothed belt 10 in FIG. 2.

Although only a part of the toothed belt 10 is shown in FIG. 2, the toothed belt 10 is an endless meshing transmission belt. The toothed belt 10 is a single-sided toothed belt.

The belt length (belt length along a belt pitch line BL) of the toothed belt 10 is, for example, 400 mm or less. The belt length is preferably 100 mm or more and 400 mm or less. The belt length is more preferably 150 mm or more and 380 mm or less.

A belt width Wb of the toothed belt 10 is, for example, 20 mm or more and 45 mm or less.

A belt thickness Tb of the toothed belt 10 is, for example, 1.1 mm or more and 3.0 mm or less. The belt thickness Tb of the toothed belt 10 is the thickness of the thickest part of the toothed belt 10.

The dimensions of the toothed belt according to the embodiment of the present invention are not limited to these ranges.

The toothed belt 10 has the plurality of belt teeth 12 on the inner circumferential surface thereof.

The belt teeth 12 of the toothed belt 10 have a nominal pitch of 2 mm.

Here, the nominal pitch has the same meaning as "nominal pitch" used in JIS B 1857-1, etc. In the embodiment of the present invention, the range of the nominal pitch (tooth pitch Pb) of the toothed belt 10 is 2 ± 0.005 mm.

The tooth profile of each belt tooth 12 is, for example, a curvilinear tooth profile.

In FIG. 4, a double-headed arrow Wt indicates the width of the belt tooth 12. The width of the belt tooth 12 is defined as the dimension between the ends of a pair of tooth bottom portions 15 adjacent to each other with the belt tooth 12 located therebetween in the belt circumferential direction.

The width Wt of the belt tooth 12 is, for example, 0.8 mm or more and 1.8 mm or less.

### Toothed Pulley

The toothed pulley 20 is made of stainless steel, for example. The toothed pulley 20 has the pulley grooves 21 which are provided at a predetermined pitch along the outer circumference thereof and mesh with the belt teeth 12 of the toothed belt 10.

In the toothed pulley 20, the number of teeth of the drive pulley 22 is, for example, 20 or more and 50 or less. The number of teeth of the driven pulley 24 is, for example, 100 or more and 150 or less.

The tooth profile of each pulley groove 21 is, for example, a curvilinear tooth profile. The tooth profile of the pulley groove 21 corresponds to the tooth profile of the belt tooth 12.

The toothed pulley 20 may include a flange, for example.

### Relationship between Toothed Belt and Toothed Pulley

In the power transmission belt system 1, the belt teeth 12 of the toothed belt 10 are configured to mesh smoothly with the pulley grooves 21 of the toothed pulley 20.

In the power transmission belt system 1, the toothed belt 10 and the drive pulley 22, and the toothed belt 10 and the driven pulley 24, each satisfy the following Formula (1). $1.5 X - 0.31 < Y < X - 0.03$ (1)

In the Formula (1), X is the PLD (PITCH LINE DIFFERENTIAL) of the toothed belt 10. The PLD of the toothed belt 10 is the distance between a pitch line and a tooth bottom surface in the toothed belt 10.

The PLD of the toothed belt 10 is preferably 0.280 mm or more and 0.360 mm or less.

In this case, smooth meshing between the toothed belt 10 and the toothed pulley 20 is easily ensured, and thus this case is more suitable for suppressing noise.

On the other hand, if the PLD of the toothed belt 10 is less than 0.280 mm, interference becomes stronger on the belt traveling direction side when the belt teeth and the pulley teeth mesh with each other, thereby worsening noise. Also, if the PLD of the toothed belt 10 exceeds 0.360 mm, interference becomes stronger on the side opposite to the belt traveling direction when the belt teeth and the pulley teeth mesh with each other, thereby worsening noise.

The PLD of the toothed belt 10 is more preferably 0.300 mm or more and 0.340 mm or less.

In the Formula (1), Y is a value calculated by the following Formula (2). $Y = \left(\begin{matrix}\left(toothed belt nominal pitch\times number of pulley teeth T/π\right) \\ - tooth tip circle diameter\end{matrix}\right) / 2$ (2)

Y represented by the above Formula (2) is a value similar to the PLD of the toothed pulley 20. Since the power transmission belt system 1 has a predetermined relationship between X, which is the PLD of the toothed belt 10, and Y, which is similar to the PLD of the toothed pulley 20, smooth meshing between the toothed belt 10 and the toothed pulley 20 is ensured, and thus noise is suppressed.

The nominal pitch of the toothed belt 10 is 2 mm. Therefore, the above Formula (2) can be rewritten as the following Formula (2'). $Y = \left(\left(2\times number of pulley teeth T/π\right)-tooth tip circle diameter\right) / 2$ (2')

In the above Formula (2), the value of Y is preferably 0.180 mm or more and 0.280 mm or less.

In this case, smooth meshing between the toothed belt 10 and the toothed pulley 20 is easily ensured, and thus this case is more suitable for suppressing noise.

In the power transmission belt system 1, the PLD of each of the drive pulley 22 and the driven pulley 24 is preferably 0.180 mm or more and 0.280 mm or less.

In this case, smooth meshing between the toothed belt 10 and the toothed pulley 20 is easily ensured, and thus this case is more suitable for suppressing noise.

On the other hand, if the PLD of the toothed pulley 20 is less than 0.180 mm, the pulley tooth grooves become narrower, raising the interference position when the toothed belt 10 and the toothed pulley 20 mesh with each other, which worsens the interference condition. Also, if the PLD of the toothed pulley 20 exceeds 0.280 mm, the pulley tooth grooves become wider, lowering the interference position when the toothed belt 10 and the toothed pulley 20 mesh with each other, which worsens the interference condition.

The PLD of the toothed pulley 20 is more preferably 0.200 mm or more and 0.260 mm or less.

The PLD of the toothed pulley 20 is the radial distance between a pitch circle diameter and the tooth tip circle diameter.

In the power transmission belt system 1, it is preferable that the PLDs of the drive pulley 22 and the driven pulley 24 are the same value.

The belt teeth 12 of the toothed belt 10 are helical teeth, as shown in FIG. 5. In FIG. 5, θ is the angle of the tooth trace of the belt tooth 12.

The angle θ of the tooth trace of the belt tooth 12, which is a helical tooth, is 5.0°or more and 9.0°or less. In this case, each belt tooth 12 gradually meshes with the pulley groove 21 along the tooth trace thereof from one side to the other side when the toothed belt 10 and the toothed pulley 20 mesh with each other, so that the meshing impact sound can be reduced. Therefore, the noise in the power transmission belt system 1 is suppressed.

On the other hand, if the angle of the above tooth trace is less than 5.0 degrees, the noise reduction effect by adopting helical teeth is insufficient. In addition, vibrations of the toothed belt are also more likely to occur. If the angle of the tooth trace exceeds 9.0 degrees, the lateral force caused by the helical teeth may become excessively large, and the side surface of the toothed belt may wear due to contact between the side surface of the toothed belt and the pulley flange, etc. In addition, due to the increase in the lateral force, rubbing sound caused by contact with the flange and rubbing sound generated during meshing under the lateral force increase, thereby increasing noise.

The toothed pulley 20 which meshes with the toothed belt 10 also has helical teeth.

An overlap ratio ε of the belt teeth 12 of the toothed belt 10, which are helical teeth, is preferably 0.80 or more.

The reason for this is that in the case of a helical-tooth belt, the tooth trace of each belt tooth is diagonal (not at 90°) with respect to the belt traveling direction, and thus each helical tooth meshes sequentially from the teeth at the belt edge, and before the meshing finishes, the next tooth begins to mesh, thereby stabilizing the running state of the belt.

The overlap ratio ε of the above belt teeth refers to a ratio of an overlapping period between a period during which one belt tooth meshes with the pulley tooth groove to a period during which the next belt tooth meshes with the pulley tooth groove, and is calculated by the following Formula (3). $ε = Wb ⋅ tanθ / Pb$ (3) In the formula, Wb is the width of the toothed belt, θ is the angle of the tooth trace, and Pb is the tooth pitch of the toothed belt.

### Configuration of Toothed Belt

The toothed belt 10 includes a belt body 11, the tensile cord 13, and a reinforcing fabric 14, as shown in FIG. 2.

The belt body 11 has a band-like shape and includes a base portion 11a whose cross-section perpendicular to the belt longitudinal direction has a quadrangular shape and a plurality of tooth portions 11b provided on the inner circumferential side of the base portion 11a. The plurality of tooth portions 11b are integrated with the base portion 11a. The plurality of tooth portions 11b are provided at predetermined equal intervals along the belt longitudinal direction.

In FIG. 4, a double-headed arrow Sb indicates the thickness of the base portion 11a.

The thickness of the base portion 11a is, for example, 0.30 mm or more and 1.6 mm or less. The thickness of the base portion 11a is preferably 0.50 mm or more and 1.40 mm or less.

In the toothed belt 10, the reinforcing fabric 14 is provided so as to cover the inner circumferential surfaces of the tooth portions 11b. In the toothed belt 10, each belt tooth 12 is composed of the tooth portion 11b and the reinforcing fabric 14.

In FIG. 4, a double-headed arrow Hb indicates the tooth height of the belt tooth 12.

The tooth height Hb of the belt tooth 12 is, for example, 0.50 mm or more and 1.0 mm or less. Here, the tooth height Hb of the belt tooth 12 refers to the distance in the belt thickness direction from the adjacent tooth bottom portion 15 to the apex of the tooth tip of the belt tooth 12 (see Hb in FIG. 4).

In the toothed belt 10, at the tooth bottom portion 15, the tensile cord 13 embedded in a portion on the inner circumferential side of the base portion 11a of the belt body 11 is placed immediately inside the reinforcing fabric 14 (on the belt outer circumferential side).

The belt body 11 is composed of, for example, a rubber composition (crosslinked rubber composition) obtained by crosslinking an uncrosslinked rubber composition containing a rubber component and rubber compounding ingredients through heating and pressurization.

Examples of the rubber component include hydrogenated nitrile rubber (HNBR), chlorosulfonated polyethylene rubber, chloroprene rubber (CR), and ethylene-α-olefin elastomers such as ethylene-propylene-diene rubber (EPDM).

As the rubber compounding ingredients, conventionally known rubber compounding ingredients can be used. Examples of the rubber compounding ingredients include a vulcanization accelerator aid, an anti-aging agent, a reinforcing material, a plasticizer, a co-crosslinking agent, and a crosslinking agent.

Examples of the vulcanization accelerator aid include metal oxides, metal carbonates, fatty acids, and derivatives thereof. Examples of the metal oxides include zinc oxide (zinc white) and magnesium oxide.

Only one of these vulcanization accelerator aids may be used, or two or more of these vulcanization accelerator aids may be used in combination.

The content of the vulcanization accelerator aid is, for example, 3 parts by mass or more and 15 parts by mass or less per 100 parts by mass of the rubber component.

Examples of the anti-aging agent include benzimidazole-based anti-aging agents, aromatic secondary amine-based anti-aging agents, and amine-ketone-based anti-aging agents. Only one of these anti-aging agents may be used, or two or more of these anti-aging agents may be used in combination.

As the anti-aging agent, it is preferable to use a benzimidazole-based anti-aging agent and an aromatic secondary amine-based anti-aging agent in combination.

The content of the anti-aging agent is, for example, 1.5 parts by mass or more and 3.5 parts by mass or less per 100 parts by mass of the rubber component.

Examples of the reinforcing material include carbon black and silica. As the reinforcing material, it is preferable to use carbon black and silica in combination.

Examples of the carbon black include channel black, furnace black, thermal black, and acetylene black.

Examples of the furnace black include SAF, ISAF, N-339, HAF, N-351, MAF, FEF, SRF, GPF, ECF, and N-234.

Examples of the thermal black include FT and MT.

Only one of these carbon blacks may be used, or two or more of these carbon blacks may be used in combination.

As the carbon black, it is preferable to use HAF alone or use HAF and another carbon black in combination.

The content of the carbon black is, for example, 10 parts by mass or more and 30 parts by mass or less per 100 parts by mass of the rubber component.

The content of the silica is, for example, 10 parts by mass or more and 30 parts by mass or less per 100 parts by mass of the rubber component.

Examples of the plasticizer include dialkyl sebacates, dialkyl phthalates, and dialkyl adipates.

Examples of the dialkyl sebacates include polyether esters and dioctyl sebacate (DOS).

Examples of the dialkyl phthalates include dibutyl phthalate (DBP) and dioctyl phthalate (DOP).

Examples of the dialkyl adipates include dioctyl adipate (DOA).

Only one of these plasticizers may be used, or two or more of these plasticizers may be used in combination.

As the plasticizer, it is preferable to use a polyether ester alone or use a polyether ester and another plasticizer in combination.

The content of the plasticizer is, for example, 5 parts by mass or more and 15 parts by mass or less per 100 parts by mass of the rubber component.

Examples of the co-crosslinking agent include trimethylolpropane trimethacrylate, m-phenylenedimaleimide, zinc dimethacrylate, and triallyl isocyanurate. Only one of these co-crosslinking agents may be used, or two or more of these co-crosslinking agents may be used in combination.

The content of the co-crosslinking agent is, for example, 3 parts by mass or more and 8 parts by mass or less per 100 parts by mass of the rubber component.

Examples of the crosslinking agent include sulfur and organic peroxides. Sulfur and an organic peroxide may be used in combination. Of course, only either one may be used.

When sulfur and an organic peroxide are used in combination as the crosslinking agent, as for the total content of the crosslinking agents, for example, preferably, the content of the sulfur is 0.1 parts by mass or more and 0.7 parts by mass or less, and the content of the organic peroxide is 1 part by mass or more and 5 parts by mass or less, per 100 parts by mass of the rubber component.

Examples of the tensile cord 13 include a glass tensile cord, an aramid tensile cord, a carbon tensile cord, and a steel tensile cord. These tensile cords are preferably composed of twisted yarns.

As for the outer diameter of the tensile cord 13, each of an outer diameter φT in the belt thickness direction and an outer diameter φW in the belt width direction is preferably 0.15 mm or more and 0.80 mm or less. More preferably, each of the outer diameter φT and the outer diameter φW is 0.25 mm or more and 0.50 mm or less.

The outer diameter φT in the belt thickness direction and the outer diameter φW in the belt width direction may be the same or different.

The tensile cord 13 has a pitch in the belt width direction and is provided so as to form a spiral. The tensile cord 13 may be composed of two yarns, an S-twisted yarn and a Z-twisted yarn, which are arranged so as to form a double spiral.

The tensile cord 13 is arranged so as to be spaced in the belt width direction and extend in parallel.

In this case, the number of tensile cords 13 per 10 mm of belt width is preferably 10 or more and 26 or less. The toothed belt 10 in which the tensile cord 13 is arranged as described above is suitable for ensuring excellent durability in high-load transmission and excellent tension retention in high-load transmission. From the same viewpoint, the number of tensile cords 13 is more preferably 14 or more and 24 or less per 10 mm.

Moreover, the dimension of the gap between adjacent tensile cords 13 is, for example, 0.1 mm or more and 0.7 mm or less.

The tensile cord 13 may be subjected to an adhesive treatment to enhance adhesion to the belt body.

Examples of the adhesive treatment include RFL treatment in which heating is performed after immersion in an RFL aqueous solution, and rubber glue treatment in which drying is performed after immersion in rubber glue. Only either one of these adhesive treatments may be performed, or both of these adhesive treatments may be performed.

The tensile cord 13 may be subjected to a prime coat treatment prior to the adhesive treatment. Examples of the prime coat treatment include treatment in which heating is performed after immersion in an epoxy solution and treatment in which heating is performed after immersion in an isocyanate solution.

The adhesive treatment and the prime coat treatment are performed prior to winding the tensile cord on a mold in a method for producing a toothed belt described below.

The reinforcing fabric 14 is composed of, for example, a woven fabric, a knitted fabric, a nonwoven fabric, or the like.

Examples of the fibers constituting the reinforcing fabric 14 include polyamide fibers (nylon fibers), polyester fibers, aramid fibers, polyparaphenylene benzobisoxazole (PBO) fibers, and cotton.

As the reinforcing fabric 14, for example, a woven fabric made of polyamide fibers is preferable.

The reinforcing fabric 14 preferably has elasticity. For example, a woven fabric in which weft yarns are subjected to woolly-finish has elasticity. In this case, the reinforcing fabric 14 is preferably provided such that the direction in which the reinforcing fabric 14 is easily stretched coincides with the belt longitudinal direction.

The thickness of the reinforcing fabric 14 is, for example, 0.05 mm or more and 0.3 mm or less.

The reinforcing fabric 14 may be subjected to an adhesive treatment to enhance adhesion to the belt body 11.

Examples of the adhesive treatment include RFL treatment in which heating is performed after immersion in an RFL aqueous solution, soaking treatment in which drying is performed after immersion in low-viscosity rubber glue, and coating treatment in which high-viscosity rubber glue is applied to the surface on the belt body side and dried. Only one of these treatments may be performed, or two or more of these treatments may be performed.

The reinforcing fabric 14 may be subjected to a prime coat treatment in which heating is performed after immersion in an epoxy solution, or a prime coat treatment in which heating is performed after immersion in an isocyanate solution, prior to the adhesive treatment.

The adhesive treatment and the prime coat treatment are performed prior to winding the reinforcing fabric 14 on a mold in the method for producing a toothed belt described below.

### Production Method for Toothed Belt

A production method for the toothed belt 10 will be described in order of process steps.

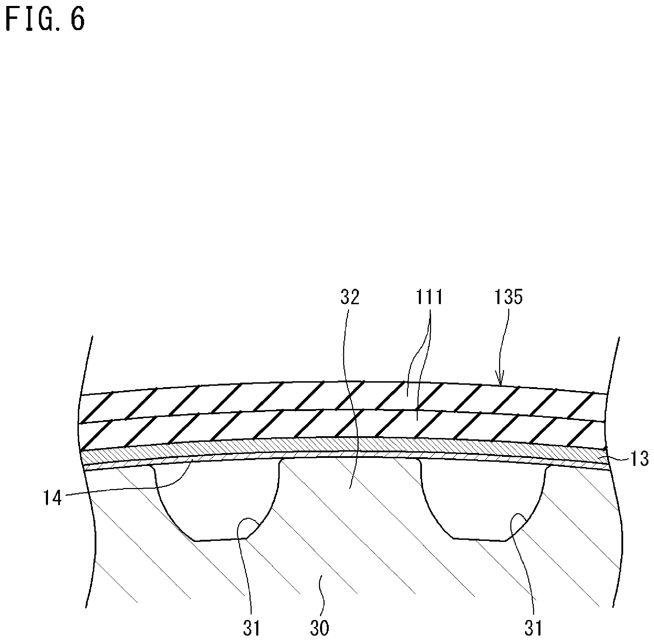

FIG. 6 to FIG. 8 are diagrams illustrating the production method for the toothed belt 10. FIG. 6 to FIG. 8 show only a part of a mold 30 for belt molding and a belt (including belt materials).

In the production of the toothed belt 10, the mold 30 for belt molding is used.

The mold 30 has a cylindrical shape. On the outer circumference of the mold 30, recesses 31 extending in the axial direction and protrusions 32 extending in the axial direction are provided. The recesses 31 are grooves that have a cross-sectional shape corresponding to the belt tooth 12 and extend in the axial direction (direction perpendicular to the surface of the drawing sheet of FIG. 6). The recesses 31 are provided at a constant pitch so as to be spaced from each other in the circumferential direction. The protrusions 32 are each provided between adjacent recesses 31.
(1) The materials are prepared.

The rubber component is masticated, and the rubber compounding ingredients are further loaded and kneaded to obtain an uncrosslinked rubber composition. The obtained uncrosslinked rubber composition is shaped to produce an uncrosslinked rubber composition sheet 111. At this time, as the method for molding the uncrosslinked rubber composition sheet 111, for example, calendering or the like can be employed.

The tensile cord 13 and the reinforcing fabric 14 are prepared and are each subjected to an adhesive treatment if necessary.

Furthermore, the reinforcing fabric 14 is shaped into a tubular shape.

(2) The materials are stacked in order. As shown in FIG. 6, first, the reinforcing fabric 14 shaped into a tubular shape is placed on the outer circumferential surface of the mold 30. Next, the tensile cord 13 is spirally wound on the reinforcing fabric 14 from above.

Furthermore, the uncrosslinked rubber composition sheet 111 is wound thereon. The uncrosslinked rubber composition sheet 111 is wound in multiple layers (two layers in FIG. 6). Accordingly, an uncrosslinked slab 135 in which the reinforcing fabric 14, the tensile cord 13, and the uncrosslinked rubber composition sheet 111 are stacked is molded on the mold 30. At this time, the uncrosslinked rubber composition sheet 111 is preferably stacked such that the orientation direction thereof corresponds to the belt longitudinal direction.

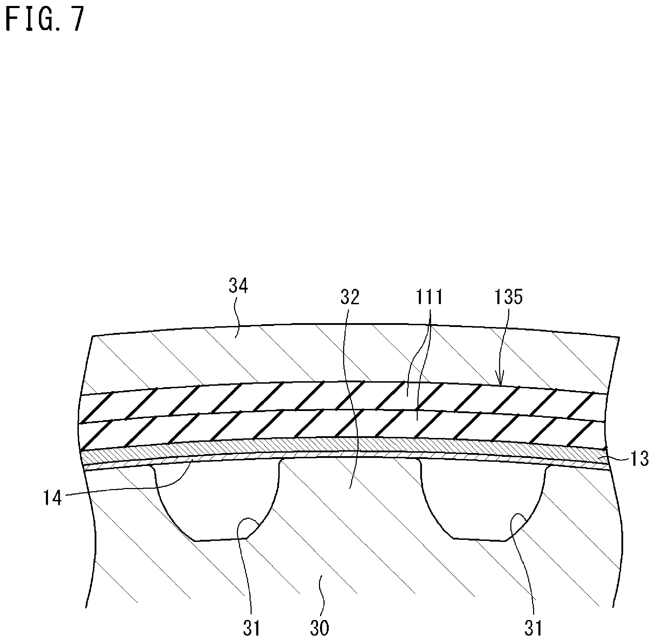

(3) As shown in FIG. 7, a rubber sleeve 34 is placed over the uncrosslinked slab 135 on the mold 30 and put into a vulcanization vessel, and the vulcanization vessel is sealed. Next, the vulcanization vessel is filled with high-temperature and high-pressure steam. Furthermore, the vulcanization vessel is maintained in this state for a predetermined time. Accordingly, the uncrosslinked slab 135 is pressed against the mold 30 side while being heated.

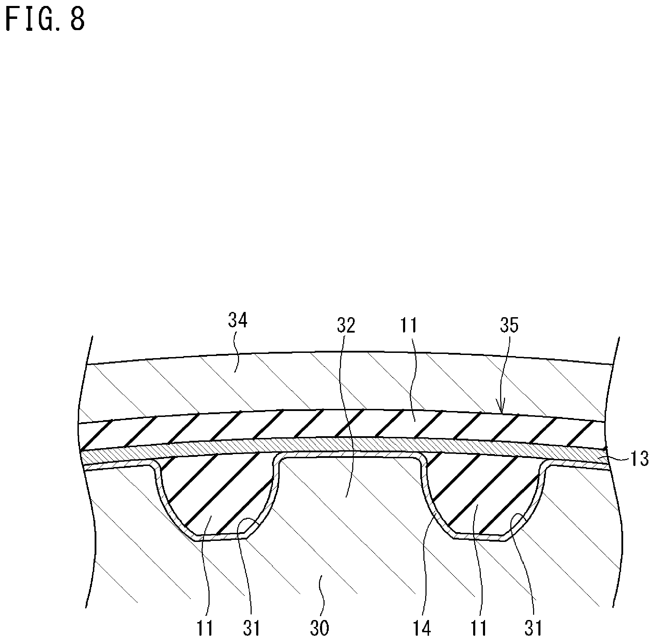

At this time, the uncrosslinked rubber composition sheet 111 passes between the tensile cords 13, flows into each of the plurality of recesses 31 of the mold 30 while pressing the reinforcing fabric 14, and is crosslinked to form a crosslinked rubber composition 11 constituting a belt body. Simultaneously, the tensile cord 13, the reinforcing fabric 14, and the crosslinked rubber composition 11 become integrated with each other. As a result, a cylindrical belt slab 35 is molded as shown in FIG. 8.

(4) The internal pressure of the vulcanization vessel is reduced to release the seal. Subsequently, the belt slab 35 molded between the mold 30 and the rubber sleeve 34 is demolded. Then, the demolded belt slab 35 is cut into rings. Through these steps, the toothed belt 10 is obtained.

### Production Method for Toothed Pulley

The toothed pulley 20 can be produced by a conventionally known method.

The toothed pulley 20 can be produced, for example, by producing a dedicated hob cutter corresponding to the shape of the pulley grooves of the toothed pulley, then performing tooth cutting processing on a metal material using this hob cutter, and further performing hole drilling processing, outer shape processing, flange attachment, etc., if necessary.

### EXAMPLES

Hereinafter, the embodiment of the present invention will be more specifically described by means of examples, but the embodiment of the present invention is not limited to the examples below.

Here, a power transmission belt system including a toothed belt and a toothed pulley was produced, and a noise test targeting this power transmission belt system was conducted.

### Toothed Belt

Toothed belts (A) to (J) having the same configuration as the toothed belt 10 shown in FIG. 2 to FIG. 5 and a nominal pitch of 2 mm were produced. Each toothed belt was produced by the method described above (see FIG. 6 to FIG. 8).

The toothed belt (A) has a belt width Wb of 22 mm and a belt circumference of 330 mm in a state where a compression ratio is 0%.

The toothed belt (A) has helical teeth with a tooth trace angle of 6.7°as belt teeth. In the toothed belt (A), the overlap ratio ε of the helical teeth is 1.29.

The toothed belt (A) has a tooth height Hb of 0.76 mm and a
total thickness Tb (Hb + Sb) of 2.1 mm.

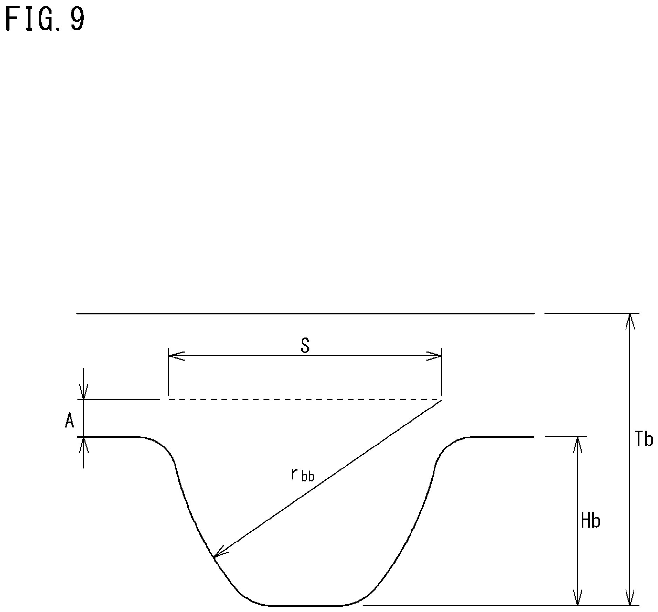

As for the dimensions of the belt teeth of the toothed belt (A), S is 1.300 mm, A is 0.172 mm, and r_{bb} is 1.300 mm in the dimensions of a belt tooth shown in FIG. 9. In FIG. 9, "S" and "r_{bb}" respectively correspond to "S" and "r_{bb}" listed in Table 4 of JIS B 1857-1 (2015), and "A" corresponds to "a-Y" derived from Table 4 of JIS B 1857-1 (2015).

In the toothed belts (A) to (J), the rubber component of the belt body 11 is EPDM.

In the toothed belts (A) to (J), the tensile cord 13 is a glass tensile cord. The outer diameter φT in the belt thickness direction and the outer diameter φW in the belt width direction of this glass tensile cord are both 0.33 mm.

In the toothed belts (A) to (J), the reinforcing fabric 14 is a woven fabric. The warp and weft yarns of this woven fabric are polyamide 66 fibers. The PLD of the toothed belt 10 is adjusted by adjusting the thickness of the reinforcing fabric 14 or the magnitude of a winding load to the tensile cord.

In the toothed belts (A) to (J), the materials constituting the belt body 11, the tensile cord 13, and the reinforcing fabric 14 were each made identical.

### Toothed Pulley

Toothed pulleys (A1) to (F1) and toothed pulleys (A2) to (F2) having different shapes of pulley grooves 21 were produced. Toothed pulleys having the same alphabetic designation, such as the toothed pulley (A1) and the toothed pulley (A2), form a pair of toothed pulleys. Also, a toothed pulley having a numeral "1" following the alphabetic designation is a drive pulley, and a toothed pulley having a numeral "2" following the alphabetic designation is a driven pulley.

The toothed pulleys (A1) to (F1) and the toothed pulleys (A2) to (F2) were each produced through production of a dedicated hob cutter corresponding to the shape of the pulley grooves of the pulley and a production process including tooth cutting processing using this hob cutter.

Here, the groove shapes of the paired drive pulley and driven pulley are the same.

The toothed pulleys (A1) to (F1) have a tooth tip circle diameter listed in Table 1 and 40 teeth (40T).

The toothed pulleys (A2) to (F2) have a tooth tip circle diameter listed in Table 1 and 110 teeth (110T).

The width of each toothed pulley is the belt width + 4 mm.

Each toothed pulley is made of stainless steel.

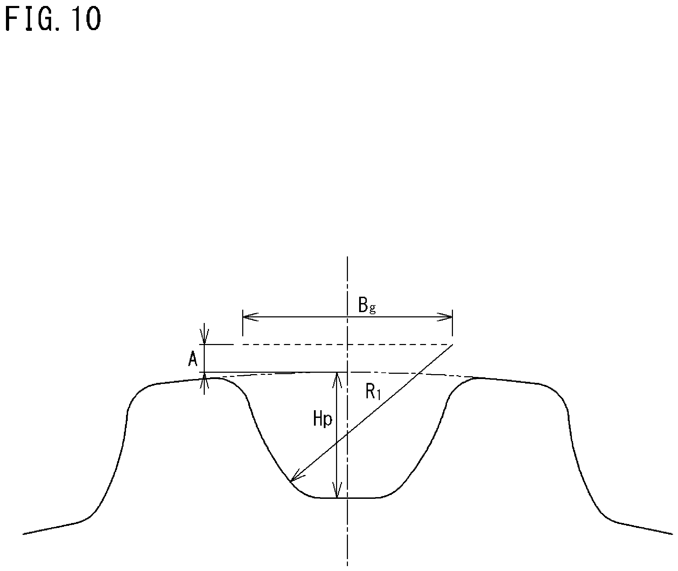

As for the dimensions of the pulley grooves of the toothed pulley (A1) and the toothed pulley (A2), Hp is 0.760 mm, R₁ is 1.325 mm, A is 0.172 mm, and B_{g} is 1.300 mm in the dimensions of a pulley groove shown in FIG. 10.

In FIG. 10, "Hp", "R₁", and "B_{g}" respectively correspond to "H_{g}", "R₁", and "B_{g}" listed in Table 13 of JIS B 1857-2 (2015), and "A" corresponds to "a-Y₁" derived from Table 13 of JIS B 1857-2 (2015).

Also, the toothed pulleys (B1) to (F1) are pulleys each obtained by changing the PLD of the toothed pulley (A1), and the toothed pulleys (B2) to (F2) are pulleys each obtained by changing the PLD of the toothed pulley (A2).

### Examples 1 to 8 and Comparative Examples 1 to 7

A power transmission belt system 40 was configured using the combination of a toothed belt 48, a drive pulley 42, and a driven pulley 44 shown in Table 1.

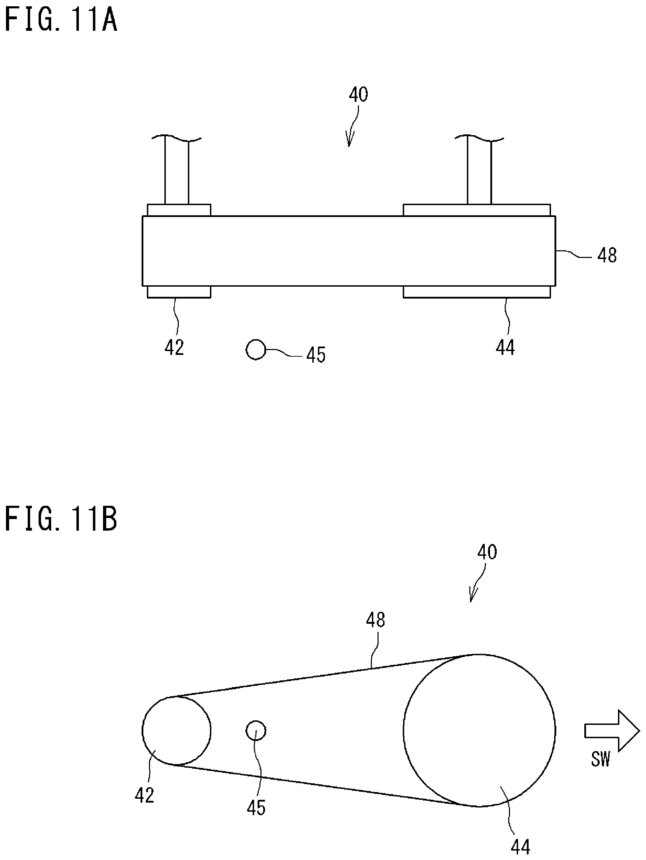

FIG. 11A and FIG. 11B show a pulley layout of the power transmission belt system 40. FIG. 11A is a top view of the power transmission belt system 40, and FIG. 11B is a front view of the power transmission belt system 40.

The power transmission belt system 40 was configured by winding the toothed belt 48 around pulleys on two shafts including the drive pulley 42 and the driven pulley 44.

In this power transmission belt system 40, an SW (set weight) was fixed such that the belt tension was 100 N. The speed ratio of this power transmission belt system 40 is 2.75.

In the power transmission belt system 40, the toothed belt 48 was run, and the noise level during running was measured.

The noise level measurement was conducted using a precision sound level meter (product name NL-52, manufactured by RION Co., Ltd.) equipped with a sound-collecting microphone 45. At this time, the sound-collecting microphone 45 was installed at a position 25 mm laterally (in the belt width direction) from the side surface of the toothed belt 48, and 20 mm away from the center of the drive pulley toward the center of the driven pulley.

In this evaluation, the noise level average value of the meshing primary sound measured when the rotational speed was varied from 500 rpm to 2000 rpm was used as a measured value.

Based on the measured value, the noise level was evaluated in
four grades from AA to C.
AA: 64 dB or less
A: Exceeding 64 dB and 70 dB or less
B: Exceeding 70 dB and 75 dB or less
C: Exceeding 75 dB

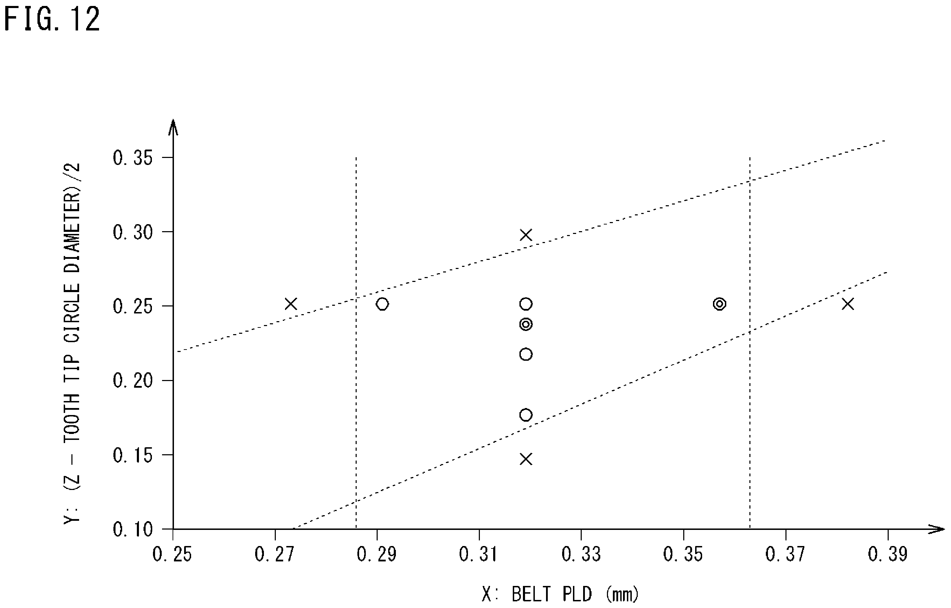

The results are shown in Table 1 and FIG. 12.

FIG. 12 shows the results of Examples 1 to 6 and Comparative Examples 1 to 4. In FIG. 12, each Example/Comparative Example showing a result of AA is plotted with "⊚", each Example/Comparative Example showing a result of A is plotted with "○", each Example/Comparative Example showing a result of B is plotted with "△", and each Example/Comparative Example showing a result of C is plotted with "×".

**[Table 1]**

| | | | Comparative Example 1 | Example 1 | Example 2 | Example 3 | Example 4 | Comparative Example 2 | Comparative Example 3 | Example 5 |
|---|---|---|---|---|---|---|---|---|---|---|
| Toothed belt | Type | | (A) | (A) | (A) | (A) | (A) | (A) | (B) | (C) |
| | Nominal pitch (mm) | | 2 | 2 | 2 | 2 | 2 | 2 | 2 | 2 |
| | Belt length (mm) | | 330 | 330 | 330 | 330 | 330 | 330 | 330 | 330 |
| | Belt width (mm) | | 22 | 22 | 22 | 22 | 22 | 22 | 22 | 22 |
| | X: PLD (mm) | | 0.319 | 0.319 | 0.319 | 0.319 | 0.319 | 0.319 | 0.273 | 0.291 |
| | Angle of tooth trace (°) | | 6.7 | 6.7 | 6.7 | 6.7 | 6.7 | 6.7 | 6.7 | 6.7 |
| | Overlap ratio of helical teeth | | 1.29 | 1.29 | 1.29 | 1.29 | 1.29 | 1.29 | 1.29 | 1.29 |
| Toothed pulley | Drive pulley | Type | (A1) | (B1) | (C1) | (D1) | (E1) | (F1) | (E1) | (E1) |
| | | Number of teeth (teeth) | 40 | 40 | 40 | 40 | 40 | 40 | 40 | 40 |
| | | Tooth tip circle diameter (mm) | 25.16 | 25.10 | 25.02 | 24.98 | 24.96 | 24.86 | 24.96 | 24.96 |
| | Driven pulley | Type | (A2) | (B2) | (C2) | (D2) | (E2) | (F2) | (E2) | (E2) |
| | | Number of teeth (teeth) | 110 | 110 | 110 | 110 | 110 | 110 | 110 | 110 |
| | | Tooth tip circle diameter (mm) | 69.73 | 69.67 | 69.59 | 69.55 | 69.52 | 69.43 | 69.52 | 69.52 |
| | PLD (mm) | | 0.150 | 0.180 | 0.220 | 0.240 | 0.254 | 0.300 | 0.254 | 0.254 |
| Z: toothed belt nominal pitch × number of pulley teeth T/π | | | 25.46 | 25.46 | 25.46 | 25.46 | 25.46 | 25.46 | 25.46 | 25.46 |
| Y: (Z - tooth tip circle diameter)/2 (Note 1) | | | 0.148 | 0.178 | 0.218 | 0.238 | 0.252 | 0.298 | 0.252 | 0.252 |
| Speed ratio | | | 2.75 | 2.75 | 2.75 | 2.75 | 2.75 | 2.75 | 2.75 | 2.75 |
| Whether formula (1) is satisfied | | | Poor | Good | Good | Good | Good | Poor | Poor | Good |
| Noise measurement results | | | C | A | A | AA | A | C | C | A |

| | | | | | | | | | | |
|---|---|---|---|---|---|---|---|---|---|---|
| Note 1: In the formula, Z represents "toothed belt nominal pitch × number of pulley teeth T/π". | | | | | | | | | | |

**[Table 1] (cont.)**

| | | | Example 6 | Comparative Example 4 | Example 7 | Example 8 | Comparative Example 5 | Comparative Example 6 | Comparative Example 7 |
|---|---|---|---|---|---|---|---|---|---|
| Toothed belt | Type | | (D) | (E) | (F) | (G) | (H) | (I) | (J) |
| | Nominal pitch (mm) | | 2 | 2 | 2 | 2 | 2 | 2 | 2 |
| | Belt length (mm) | | 330 | 330 | 330 | 330 | 330 | 330 | 330 |
| | Belt width (mm) | | 22 | 22 | 18 | 42 | 22 | 22 | 22 |
| | X: PLD (mm) | | 0.357 | 0.382 | 0.319 | 0.319 | 0.319 | 0.319 | 0.319 |
| | Angle of tooth trace (°) | | 6.7 | 6.7 | 6.7 | 6.7 | 4.2 | 0 | 10.0 |
| | Overlap ratio of helical teeth | | 1.29 | 1.29 | 1.06 | 2.47 | 0.81 | 0 | 1.94 |
| Toothed pulley | Drive pulley | Type | (E1) | (E1) | (E1) | (E1) | (E1) | (E1) | (E1) |
| | | Number of teeth (teeth) | 40 | 40 | 40 | 40 | 40 | 40 | 40 |
| | | Tooth tip circle diameter (mm) | 24.96 | 24.96 | 24.96 | 24.96 | 24.96 | 24.96 | 24.96 |
| | Driven pulley | Type | (E2) | (E2) | (E2) | (E2) | (E2) | (E2) | (E2) |
| | | Number of teeth (teeth) | 110 | 110 | 110 | 110 | 110 | 110 | 110 |
| | | Tooth tip circle diameter (mm) | 69.52 | 69.52 | 69.52 | 69.52 | 69.52 | 69.52 | 69.52 |
| | PLD (mm) | | 0.254 | 0.254 | 0.254 | 0.254 | 0.254 | 0.254 | 0.254 |
| Z: toothed belt nominal pitch × number of pulley teeth T/π | | | 25.46 | 25.46 | 25.46 | 25.46 | 25.46 | 25.46 | 25.46 |
| Y: (Z - tooth tip circle diameter)/2 (Note 1) | | | 0.252 | 0.252 | 0.252 | 0.252 | 0.252 | 0.252 | 0.252 |
| Speed ratio | | | 2.75 | 2.75 | 2.75 | 2.75 | 2.75 | 2.75 | 2.75 |
| Whether formula (1) is satisfied | | | Good | Poor | Good | Good | Good | Good | Good |
| Noise measurement results | | | AA | C | B | A | C | C | C |

| | | | | | | | | | |
|---|---|---|---|---|---|---|---|---|---|
| Note 1: In the formula, Z represents "toothed belt nominal pitch × number of pulley teeth T/π". | | | | | | | | | |

As shown in Table 1 and FIG. 12, it has been found that the noise in the power transmission belt system is suppressed when the above Formula (1) is satisfied.

The embodiment disclosed herein is merely illustrative in all aspects and should be recognized as not being restrictive. The scope of the present invention is defined by the scope of the claims and is intended to include meaning equivalent to the scope of the claims and all modifications within the scope.

### LIST OF REFERENCE SIGNS

- 1, 40: power transmission belt system
- 10, 48: toothed belt
- 11: belt body (crosslinked rubber composition)
- 11a: base portion
- 11b: tooth portion
- 12: belt tooth
- 13: tensile cord
- 14: reinforcing fabric
- 15: tooth bottom portion
- 20: toothed pulley
- 21: pulley groove
- 22, 42: drive pulley
- 24, 44: driven pulley
- 30: mold
- 31: recess
- 32: protrusion
- 34: rubber sleeve
- 35: belt slab
- 111: uncrosslinked rubber composition sheet
- 135: uncrosslinked slab

## Claims

1. A power transmission belt system comprising:
a toothed belt having a plurality of belt teeth provided on an inner circumferential side thereof;
a first toothed pulley having a plurality of pulley grooves provided on an outer circumference thereof and configured to mesh with the belt teeth; and
a second toothed pulley having a plurality of pulley grooves provided on an outer circumference thereof and configured to mesh with the belt teeth, and having a larger diameter than the first toothed pulley, wherein
the toothed belt is wound around the first toothed pulley and the second toothed pulley,
the belt teeth have a nominal pitch of 2 mm,
the belt teeth are helical teeth having a tooth trace angle of 5.0°or more and 9.0°or less,
a speed ratio is 2.0 or more and less than 5.0, and
the toothed belt and the first toothed pulley, and the toothed belt and the second toothed pulley, each satisfy the following Formula (1), $1.5 X - 0.31 < Y < X - 0.03$ (1), where X is a PLD of the toothed belt, and Y is a value calculated by the following Formula (2), $Y = \left(\begin{matrix}\left(toothed belt nominal pitch\times number of pulley teeth T/π\right) \\ - tooth tip circle diameter\end{matrix}\right) / 2$ (2).

2. The power transmission belt system according to claim 1,
wherein the PLD of the toothed belt is 0.280 mm or more and 0.360 mm or less.

3. The power transmission belt system according to claim 1 or 2,
wherein PLDs of the first toothed pulley and the second toothed pulley are 0.180 mm or more and 0.280 mm or less.

4. The power transmission belt system according to any one of claims 1 to 3, wherein the toothed belt has a belt width of 20 mm or more.

5. The power transmission belt system according to any one of claims 1 to 4, wherein an overlap ratio ε of the belt teeth of the toothed belt is 0.80 or more.

6. The power transmission belt system according to any one of claims 1 to 5, wherein tooth profiles of the belt teeth of the toothed belt are curvilinear tooth profiles.

7. The power transmission belt system according to any one of claims 1 to 6, wherein the belt teeth of the toothed belt each have a width of 0.8 mm or more and 1.8 mm or less.

8. The power transmission belt system according to any one of claims 1 to 7, wherein
the toothed belt includes
a belt body having a band-like shape and including a base portion whose cross-section perpendicular to a belt longitudinal direction has a quadrangular shape, and a plurality of tooth portions provided on an inner circumferential side of the base portion at predetermined equal intervals and integrated with the base portion,
a tensile cord embedded in the belt body, and
a reinforcing fabric provided so as to cover inner circumferential surfaces of the tooth portions,
the toothed belt has a belt thickness of 1.1 mm or more,
the base portion has a thickness of 0.30 mm or more and 1.6 mm or less, and
the belt teeth each have a tooth height of 0.50 mm or more and 1.0 mm or less.
